# EUROPEAN PATENT APPLICATION

(11) **EP 1 352 598 A1**
(43) Date of publication of application: **15.10.2003**
(21) Application number: 03007936.2
(22) Date of filing: 08.04.2003
(51) Int. Cl.: A47J 31/40

(54) **Coffee brewing apparatus**

(30) Priority: 14.04.2002 CN 02226844
(71) Applicant: Elec-Tech International Co., Ltd., Nanping Town, Zhuhai, Guangdong Province 519060 (CH)
(72) Inventor: Wang, Donglei, Elec-Tech International Co., Ltd., Nanping Town, Zhuhai, Guangdong 519060 (CN)
(74) Representative: Reinhard - Skuhra - Weise & Partner

(57) **Abstract**

A coffee brewing apparatus comprising an upper cover (8) and a lower cover (9), a transmission unit (4,5,1), a rotation unit, wherein a brewing chamber (2) is provided on said rotation unit, and said rotation unit is driven by said transmission unit so as to rotate as well as move upward and downward inside the housing enclosed by the upper cover and the lower cover.

## Description

### CROSS-REFERENCE TO RELATED APPLICATION

This application claims the benefit of Chinese Utility Model Application No. 02226844.8 filed on April 14, 2002 in the Chinese Patent office, the disclosure of which is incorporated herein by reference.

### BACKGROUND OF THE INVENTION

### 1. Field of the invention

The present invention relates to a coffee brewing apparatus.

### 2. Description of the Related Art

Generally, the conventional coffee brewing apparatus can be divided into two types: the simply constructed type and the complicatedly constructed type. In the simply constructed type, such as the coffee brewing apparatus disclosed in the Chinese patent NO. CN2440417Y and CN2341501Y, the hot water is introduced into the coffee container filled with coffee powder to make a coffee beverage. In another coffee brewing apparatus, the coffee powder is filled into the coffee brewing chamber disposed on the top of the-container, the water contained in the lower portion of the coffee brewing apparatus is heated into water vapor. Then, the water vapor is introduced into the coffee brewing chamber through the central vertical pipe, and the water vapor introduced into the coffee brewing chamber is converted into hot water due to the cooling effect of the air surrounding the central vertical pipe to make a coffee beverage. The coffee beverage drips into the container after the consumed coffee ground is filtered out. While it is simply constructed, the coffee beverage made by this type of coffee brewing apparatus generally does not taste good.

On the other hand, the coffee brewing apparatus of the complicated constructed type, such as the one disclosed in Chinese Patent NO. CN1248893A has been proposed. In this type of coffee brewing apparatus, it is constructed as a large-sized coffee maker with complex construction. The coffee maker includes at least one coffee brewing chamber and a coffee preparing and dispensing unit for preparing and dispensing the coffee powder. The coffee brewing chamber is sealed with two plungers mounted on the upper and lower side and being movable in the axial direction, and hot water can be introduced into it due to its pressure. The coffee brewing chamber is formed in a coffee brewing housing. The coffee brewing chamber is partly rotatable along a circular track around a horizontal axis so as to reach the first position for feeding the coffee powder. After the coffee powder is fed into the coffee brewing chamber, the coffee brewing housing rotates to the second position where the hot water is fed into it, and then the brewed coffee is discharged from the coffee brewing chamber. Further, the coffee brewing housing can rotate to the third position where consumed coffee ground is removed from the coffee brewing chamber. In this case, the coffee brewing housing drives one or more plungers of the same type axially operable indirectly. However, this type of coffee brewing apparatus includes a plurality of plungers and it can be allocated in different rotation positions, thereby resulting in a complicated structure and an increased production cost.

### SUMMARY OF THE INVENTION

Accordingly, it is an object of the present invention to provide a brewing apparatus, wherein the brewing chamber is driven by the transmission unit to rotate as well as move upward and downward.

Another object of the present invention is to provide a brewing apparatus, wherein a screw member is controlled by a mechanical or electronic stroke mechanism to rotate forward and backward so that the operation of feeding, brewing and removing the consumed coffee ground can be executed in sequence.

Additional aspects and advantages of the invention will be set forth in part in the description that follows, and in part, will be obvious from the description, or may be learned by the practice of the invention.

The foregoing and other objects of the present invention are achieved by providing a coffee brewing apparatus, comprising an upper cover and a lower cover, a transmission unit and a rotation unit, wherein a brewing chamber is provided on the rotation unit, and the rotation unit is driven by the transmission unit so as to rotate as well as move upward and downward inside the housing enclosed by the upper cover and the lower cover.

Further, the rotation unit rotates around the brewing shaft as well as moves upward and downward.

According to an aspect of the invention, the rotation unit includes a brewing chamber, a lower filter plate assembly, a water-feeding core, and the transmission unit includes transmission gears, a motor and a brewing shaft. The lower filter plate assembly is provided in the first tubular chamber of the brewing chamber, and the water-feeding core is provided in the second tubular chamber. Meanwhile, The brewing shaft is connected to the brewing chamber through thread members, and the first tubular chamber communicates with the second tubular chamber through a passage. The upper end of the brewing shaft is inserted into the corresponding hole of the upper cover while its lower end is coupled to the transmission gear.

Preferably, the lower filter plate assembly and the water-feeding core are removablly connected to the brewing chamber.

According to another aspect of the invention, an intake of the feeding unit for feeding coffee and hot water and a coffee dispensing unit are provided on the upper cover. The coffee dispensing unit includes a connector for the coffee hose, a compression spring, a steel ball, an upper filter plate assembly and a consumed coffee removing plate. The consumed coffee removing plate and the upper filter plate assembly are fixedly mounted on the upper cover, and the consumed coffee removing plate has a shape of a rectangular plate. The upper filter plate assembly provides on one end thereof with a coffee inflow opening and the connector for the coffee hose is connected to the coffee inflow opening. A spring and a steel ball are provided inside the connector for the coffee hose so that the steel ball is pressed against the opening of the connection passage between the coffee inflow opening and the connector for the coffee hose.

A movable block is provided between the upper cover and the lower cover, and a groove is formed on the upper cover. The brewing chamber is provided on its outer peripheral side with a protrusion, wherein: when the brewing chamber rotates to reach the position of the movable block, the protrusion pushes the movable block to come into touch with the sidewall of the upper cover, and a sliding passage along which the brewing chamber moves upward is defined by the movable block and the groove. On the other hand, when the brewing chamber moves upward so that the protrusion separates from the movable block, the movable block separates from the sidewall, and a sliding passage along which the brewing chamber moves downward is defined by the movable block, the sidewall of the upper cover and the groove.

Preferably, the water-feeding core has an elongated end which engages with the lower cover so that the water-feeding core moves upward with respect to the brewing chamber.

Further, the lower cover is provided with a protrusion for blocking the upward movement of the lower filter plate when the lower filter plate moves upward.

In addition, the brewing apparatus can be removed from a coffee maker to be cleaned separately.

In the present invention, the operation of feeding, brewing and removing the consumed coffee ground can be performed by the composite motion of rotating and reciprocating upward and downward of the brewing chamber. As a result, the whole brewing process is easily and conveniently carried out and the brewed coffee tastes good. The brewing apparatus of the invention is simply configured and it is easy for use. Therefore, the brewing apparatus of the invention is suitable to be used in the household and offices.

### BRIEF DESCRIPTION OF THE DRAWINGS

The above and other objects and advantages of the invention will become apparent and readily appreciated from the following description of the preferred embodiments, taken in conjunction with the accompanying drawings of which:
Fig 1 is a schematic sectional view of the brewing chamber according to an embodiment of the present invention;
Fig 2 is a schematic sectional view of the coffee brewing apparatus according to an embodiment of the present invention, wherein the first tubular chamber 21 is aligned with the port of feeding unit 18 for coffee power and hot water;
Fig 3 is a schematic perspective view of the coffee brewing apparatus according to an embodiment of the present invention, wherein a sliding passage 82 is defined by the movable barrier 16 and the-side wall 81 of the upper cover 8;
Fig 4 is a schematic sectional view of the coffee brewing apparatus according to an embodiment of the present invention, wherein the hot water is fed into the brewing chamber through the water-feeding core 6;
Fig 5 is a schematic perspective view of the coffee brewing apparatus according to an embodiment of the present invention, wherein a sliding passage 83 in which the brewing chamber 2 moves downward is defined by the movable barrier 16 and the side wall 81 of the upper cover 8
Fig 6 is a schematic sectional view of the coffee brewing apparatus according to an embodiment of the present invention, wherein the lower filter plate assembly 3 engages with the lower cover 9 so as to be kept from moving downward;
Fig 7 is a schematic sectional view of the coffee brewing apparatus according to an embodiment of the present invention, wherein the lower filter plate assembly 3 moves upward with respect to the brewing chamber 2 so as to push out the consumed coffee ground 17 from the brewing chamber 2;
Fig 8 is a schematic sectional view of the coffee brewing apparatus according to an embodiment of the present invention, wherein the consumed coffee ground 17 is remove from the brewing chamber 2 by the consumed coffee removing plate 11 while the brewing chamber 2 rotates;
Fig 9.1 is a schematic sectional view of the coffee brewing apparatus according to an embodiment of the present invention, wherein the passage 23 communicates partly with the second tubular chamber 22;
Fig 9.2 is a schematic sectional view of the coffee brewing apparatus according to an embodiment of the present invention, wherein the passage 23 communicates wholly with the second tubular chamber 22 while the water-feeding core 6 moves upward with respect to the brewing chamber 2;
Fig 10 is a schematic sectional view of the coffee brewing apparatus according to an embodiment of the present invention, wherein the lower filter plate assembly 3 engages with protrusion 90 of the lower cover 9.

In the drawings, the reference numeral 1 shows a brewing shaft; 2 shows a brewing chamber; 3 shows a lower filter plate assembly; 4 shows a transmission gear; 5 shows a transmission gear; 6 shows a water-feeding core; 7 shows a coffee discharging hose; 8 shows a upper cover; 9 shows a lower cover; 10 shows a handle; 11 shows a consumed coffee removing plate; 12 shows a upper filter plate assembly; 13 shows a steel ball; 14 shows a compression spring; 15 shows a connector for the coffee discharging hose and 16 shows a movable block.

### DETAILED DESCRIPTION OF THE PREFERRED EMBODIMENTS

A preferred embodiment of the present invention will be described hereinafter in detail with reference to the attached drawings, wherein the like reference numerals refer to the like elements throughout. The present invention may, however, be embodied in many different forms and should not be construed as being limited to the embodiment set forth herein; rather, this embodiment is provided so that the present disclosure will be thorough and complete, and will fully convey the concept of the invention to those skilled in the art.

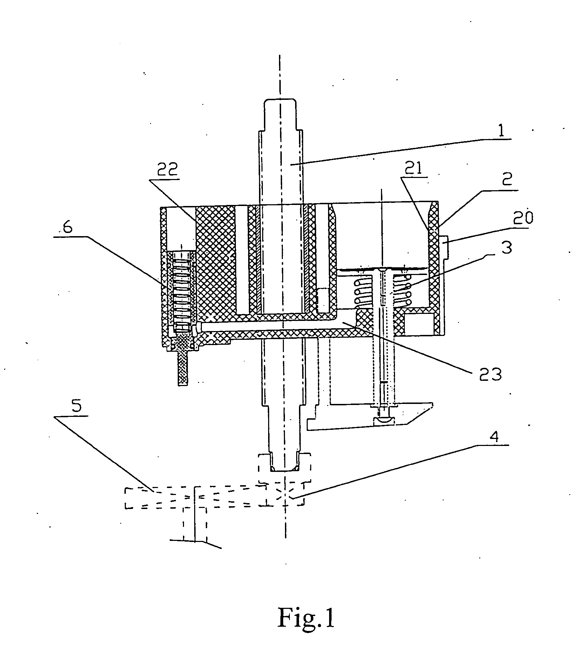

Referring to the Figs 1-9, the coffee brewing apparatus according to an embodiment of the present invention includes an upper cover 8 and a lower cover 9, a transmission unit, a rotation unit. A coffee brewing chamber 2 is provided on the rotation unit and the rotation unit is driven by the transmission unit so as to rotate and move upward and downward inside the housing enclosed by the upper cover-8 and the lower cover 9.

The rotation unit includes a brewing chamber 2, a lower filter plate assembly 3 and a water-feeding core 6. The transmission unit includes a pair of gears 4, 5, a motor (not shown) and a brewing shaft 1. The lower filter plate assembly 3 is provided in the tubular chamber 21 of the brewing chamber 2, and the water-feeding core 6 is provided in the second tubular chamber 22. The brewing shaft 1 is connected to the brewing chamber 2 through screw members, and the first tubular chamber 21 communicates with the second tubular chamber 22 through a passage 23. The upper end of the brewing shaft 1 is inserted into the corresponding hole of the upper cover while its lower end is coupled to the transmission gear 5. The rotation unit can rotate around the brewing shaft 1 as well as move upward and downward.

The lower filter plate assembly 3 and the water-feeding core 6 are removablly connected to the brewing chamber 2.

The port of feeding unit 18 for feeding coffee and hot water is provided on the upper cover 8. The coffee dispensing unit includes a connector 15 for the coffee hose, a compression spring 14, a steel ball 13, an upper filter plate assembly 12 and a consumed coffee removing plate 11. The intake of the feeding unit 18 for feeding coffee and hot water is disposed on one side of the upper cover 8 and the coffee dispensing unit is disposed on the opposite side. In this case, the consumed coffee removing plate 11 and the upper filter plate assembly 12 are fixedly mounted on the upper cover 8. The consumed coffee removing plate 11 has a shape of a rectangular plate. The upper filter plate assembly 12 provides on one end thereof with a coffee inflow opening and the connector 15 for the coffee hose is connected to the coffee inflow opening. A spring 14 and a steel ball 13 are provided inside the connector 15 for the coffee hose so that the steel ball 13 is pressed against the opening of the connection passage between the coffee inflow opening and the connector 15 for the coffee hose. The connector 15 is connected to a coffee discharging hose 7 extending outside from the housing.
The elastic movable barrier 16 having a shape of a tongue is disposed in the middle position between the upper and lower cover 8, 9 so as to form the sliding passages 82, 83 together with the groove 80 of the upper cover 8. Hereinafter, the operation of forming the sliding passages 82, 83 will be described in detail with reference to the drawings. The brewing chamber 2 is provided at its outer peripheral side with a protrusion 20. When the brewing chamber 2 rotates in the clockwise direction to reach the position of the movable barrier 16, the protrusion 20 pushes the movable barrier 16 to come into contact with the sidewall 81 of the upper cover 8 so as to limit the rotation of the brewing chamber 2. Thus, a sliding passage 82 in which the brewing chamber 2 moves upward along the brewing shaft 1 is formed by the movable barrier 16 and the groove 80 of the upper cover 8. Next, when the brewing chamber 2 moves upward to reach a predetermined height, the protrusion 20 separates from the movable barrier 16. Then, the movable barrier 16 separates from the sidewall 81 of the upper cover 8 in response to the elastic force of movable barrier 16 so as to form a sliding passage 83 together with the sidewall 81 of the upper cover 8 and the groove 80. The brewing chamber 2 moves downward along the sliding passage 83 after predetermined operation has been executed.

In the present invention, the upper and lower cover 8, 9, the transmission unit, the rotation unit, the brewing chamber 2 and other elements can be removed from the whole coffee making apparatus when a cleaning process is executed.

Hereinafter, the operation of the brewing apparatus according to the present invention will be described in detail with reference to the drawings.

Referring to FIG 1, the mechanical force is transmitted to the brewing shaft 1 through the transmission gears 4, 5 so as to drive the brewing shaft 1 to start rotating. Consequently, the brewing chamber 2 and the associated movable elements is driven to rotate around the brewing shaft 1.

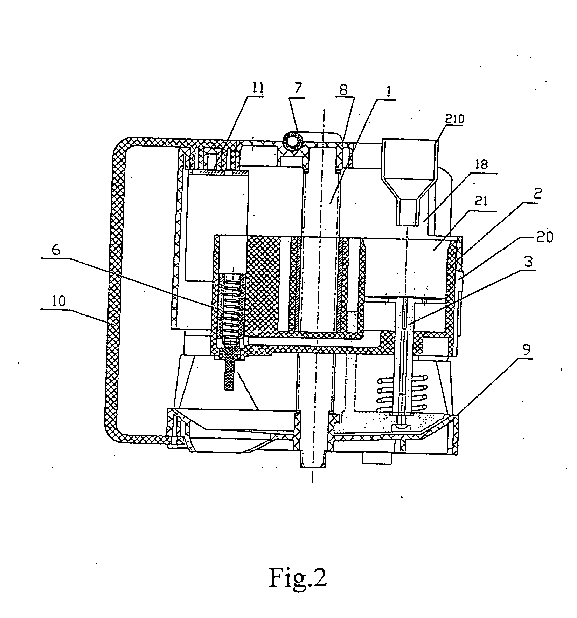

Referring to fig 2, when the brewing chamber 2 together with the associated elements rotate to the position shown in FIG 2, the first tubular chamber 21 in which the lower filter plate assembly 3 is provided corresponds to the intake of the feeding unit 18 for feeding coffee powder and hot water. At this position, the brewing chamber 2 stops rotating and the coffee powder is fed into it through the intake of the feeding unit 18. After coffee powder is fed into the brewing chamber 2 using a coffee feeding device (not shown), the brewing shaft 1 restarts to rotate in clockwise direction, thereby causing the brewing chamber 2 to rotate.

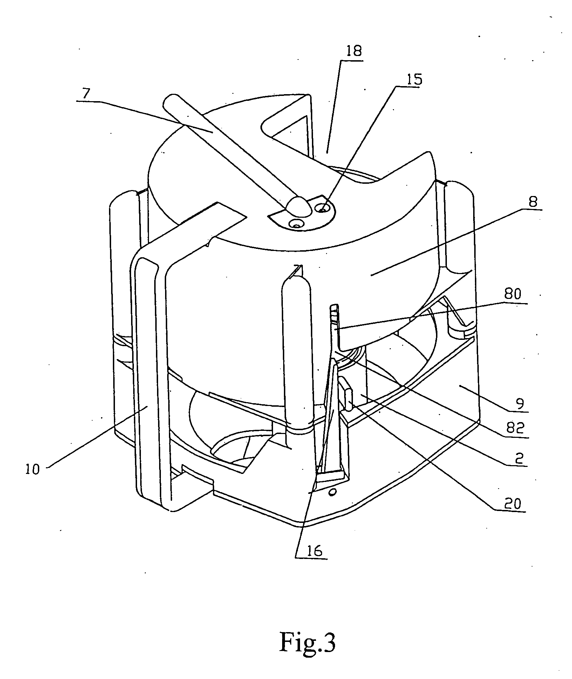

Referring to fig 3, when the brewing chamber 2 rotates an angle of 135° with respect to its initial position, it stops rotating due to the limiting of the movable barrier 16. Then, the brewing chamber 2 moves upward along the sliding passage 82 formed by the movable barrier 16 and the sidewall 81 of the upper cover 8.

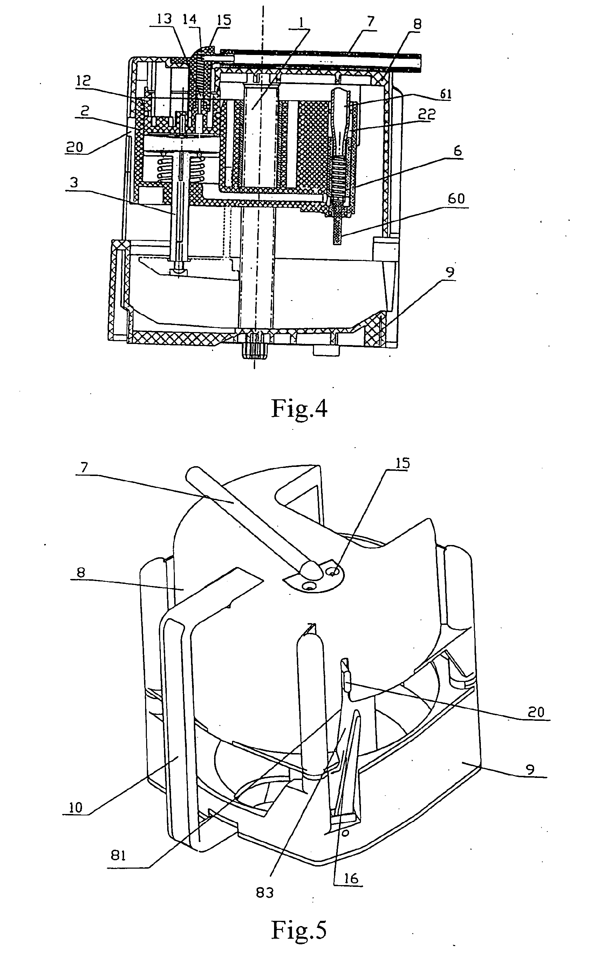

Referring to fig 4, when the brewing chamber 2 reaches to the predetermined position, the brewing shaft 1 stops rotating. Next, a water-feeding core (not shown) is inserted into the second tubular chamber 22 in which the water-feeding core 6 is disposed through the intake of the feeding unit 18. At this position, the hot water is fed and introduced into the brewing chamber 2 through the water-feeding core 6 to make a coffee drink. The brewed coffee flows into the connector 15 for the coffee hose after it passes through the upper filter plate assembly 12, and then the filtered coffee drink is discharged from the brewed chamber 2 and introduced into the coffee cup for drinking through the coffee discharging hose 7.

Referring to fig 5, when the brewing operation is completed, the brewing shaft 1 starts to rotate in the counterclockwise direction, thus causing the brewing chamber 2 to move downward along the sliding passage 83 defined by the upper cover 8 and the movable barrier 16.

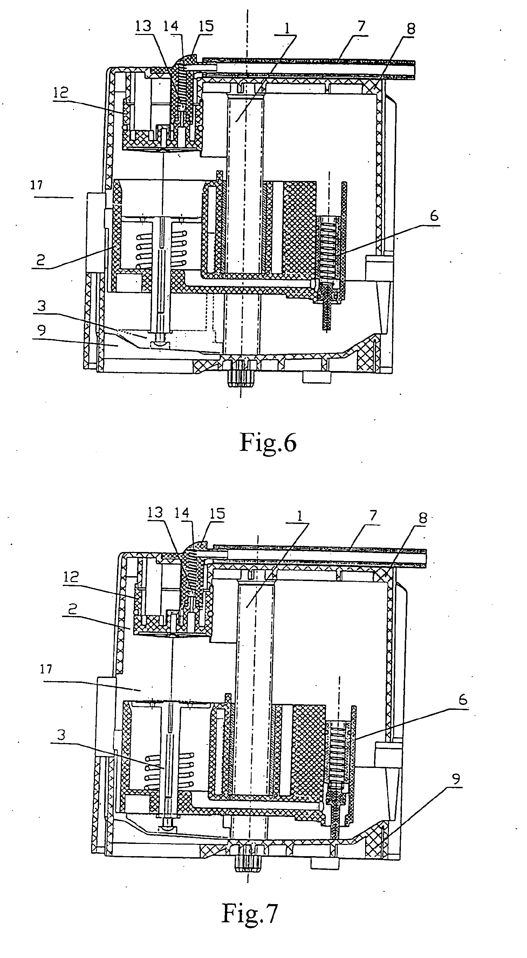

Referring to figs 6 and 7, when the brewing chamber 2 reaches the predetermined position, the lower filter plate assembly 3 comes into touch with the lower cover 9 so as to stop moving downward. On the other hand, the brewing chamber 2 continues to moves downward so that the lower filter plate assembly 3 moves upward with respect to the brewing chamber 2, thus pushing the consumed coffee ground 17 upward.

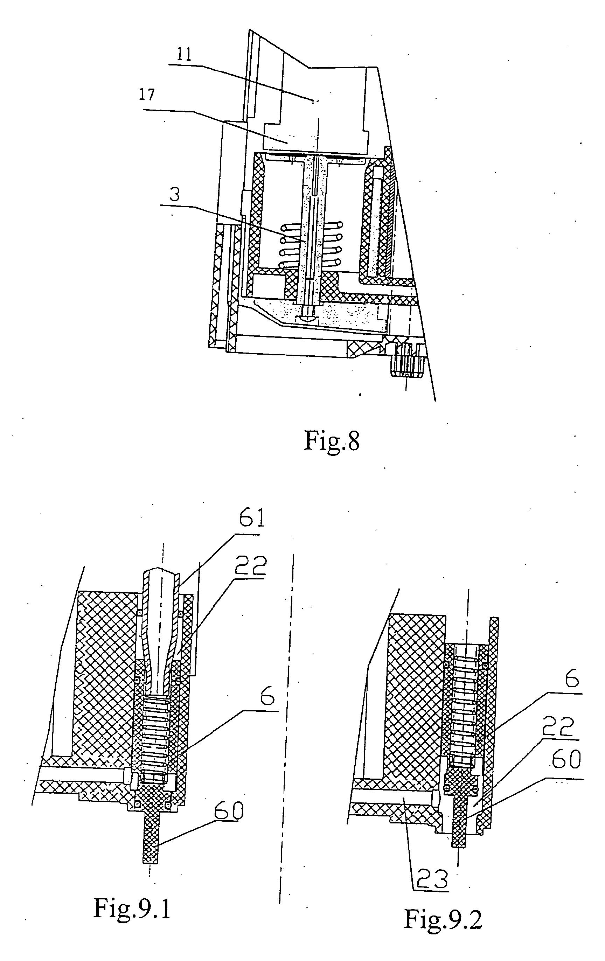

Referring to fig 8, when the brewing chamber 2 moves downward to the predetermined position, the brewing shaft 1 changes its rotation direction to rotate in the clockwise direction, thus causing the brewing chamber 2 to rotate in the clockwise direction. During this process of rotation, the consumed coffee ground 17 is removed by the consumed coffee removing plate 11. At the same time, during the movement of the brewing chamber 2, the water-feeding core 6 moves upward with respect to the brewing chamber 2 as the elongated end 60 at the lower side of water-feeding core 6 is pressed against the lower cover 9, as shown in the fig 9.1 and fig 9.2. As a result, the passage 23 communicates with the second tubular chamber 22 so that the water remained in the brewing chamber 2 flows outside from the brewing chamber 2. When the brewing chamber 2 rotates to the position for feeding water, the water-feeding core 6 is reset to its initial position due to the pressure generated by a water feeding device 61 (not shown).

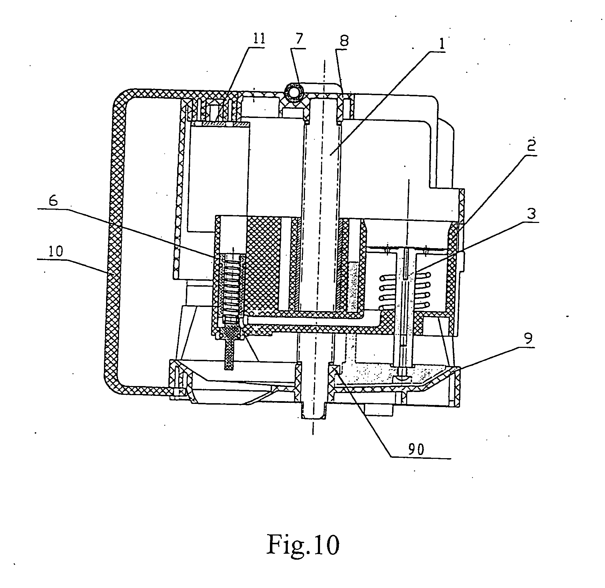

Referring to fig 10, when the brewing chamber 2 rotates to about an angle of 225° with respect to its initial position, the brewing chamber 2 stops rotating due to the limiting of the sidewall and moves upward. At the same time, the lower filter plate assembly 3 stops moving upward as the lower filter plate assembly 3 is blocked by the protrusion 90 of the lower cover 9. Then, the lower filter plate assembly 3 moves downward with respect to the brewing chamber 2. When the brewing chamber 2 reaches the position as shown in fig 2, the brewing shaft 1 stops rotating. At this time, the coffee powder is fed into the brewing chamber 2 and the brewing apparatus is ready for another brewing operation.

Although a few preferred embodiments have been shown and described, it would be appreciated by those skilled in the art that changes may be made in these embodiments without departing from the principles and spirit of the invention, the scope of the which is defined in the claims and their equivalents.

## Claims

1. A coffee brewing apparatus, comprising an upper cover and a lower cover, a transmission unit, a rotation unit, wherein a brewing chamber is provided on said rotation unit, and said rotation unit is driven by said transmission unit so as to rotate as well as move upward and downward inside the housing enclosed by the upper cover and the lower cover.

2. A coffee brewing apparatus according to claim 1, wherein:
said rotation unit includes a brewing chamber, a lower filter plate assembly and a water-feeding core;
said transmission unit includes transmission gears, a motor and a brewing shaft;
said lower filter plate assembly is provided in the first tubular chamber of the brewing chamber, and said water-feeding core is provided in the second tubular chamber;
said brewing shaft is coupled to the brewing chamber through screw thread members, and the first tubular chamber communicates with the second tubular chamber through a passage; and
the upper end of the brewing shaft is inserted into the corresponding hole of the upper cover while its lower end is coupled to the transmission gear.

3. A coffee brewing apparatus according to claim 2, wherein said rotation unit rotates around the brewing shaft as well as moves upward and downward.

4. A coffee brewing apparatus according to claim 3, wherein the said lower filter plate assembly and said water-feeding core are removablly connected to the brewing chamber.

5. A coffee brewing apparatus according to claim 1, wherein:
an intake of the feeding unit for feeding coffee powder and hot water and a coffee dispensing unit are provided on the upper cover;
wherein the coffee dispensing unit includes a connector for the coffee hose, a compression spring, a steel ball, a upper filter plate assembly and a consumed coffee removing plate;
said consumed coffee removing plate and the upper filter plate assembly are fixedly mounted on the upper cover, and said consumed coffee removing plate has a shape of a rectangular plate;
said upper filter plate assembly provides on one end thereof with a coffee inflow opening and the connector for the coffee hose is connected to the coffee inflow opening; and
a spring and a steel ball are provided inside said connector for the coffee hose so that the steel ball is pressed against the opening of the connection passage between the coffee inflow opening and said connector for the coffee hose.

6. A coffee brewing apparatus according to claim 1, wherein:
a movable barrier is provided between the upper cover and the lower cover, and a groove is located on the upper cover;
said brewing chamber is provided on its outer peripheral side with a protrusion,
wherein:
when said brewing chamber rotates to reach the position of said movable barrier, the protrusion pushes said movable barrier to contact with the sidewall of the upper cover, and a sliding passage is defined by said movable barrier and said groove of the upper cover sidewall, and said brewing chamber moves upward along the sliding passage; and
when the brewing chamber moves upward, said protrusion separates from said movable barrier, then, said movable barrier separates from the sidewall, and a sliding passage is defined by said movable barrier, said sidewall of the upper cover and said groove of the upper cover, and said brewing chamber moves downward along the sliding passage.

7. A coffee brewing apparatus according to claim 2, wherein said water-feeding core has an elongated end which is interacted with the lower cover so that said water-feeding core moves upward with respect to said brewing chamber.

8. A coffee brewing apparatus according to claim 2, wherein said lower cover is provided with a protrusion for blocking the upward movement of said lower filter when brewing chamber moves upward.

9. A coffee brewing apparatus according to claim 5, wherein said brewing apparatus can be removed out from coffee maker to be cleaned separately.
